# EUROPEAN PATENT APPLICATION

(11) **EP 3 770 301 A1**
(43) Date of publication of application: **27.01.2021**
(21) Application number: 19305966.4
(22) Date of filing: 22.07.2019
(51) Int. Cl.: C23F 3/02, B29C 45/00, C25D 11/24, C25D 11/04, C25D 11/16, C25D 11/18, C23F 3/04

(54) **METHOD FOR CHEMICAL POLISH FOR METAL PIECES**

(71) Applicant: ARKEMA FRANCE, 92700 Colombes (FR)
(72) Inventor: YASUDA, Maho, KYOTO, 600-8815 (JP)
(74) Representative: Arkema Patent

(57) **Abstract**

The invention is directed in particular to a method for chemically polishing a metal surface within a metal-polymer composite, where said composite comprises at least one metal part and at least one part made of a polymer composition, said method comprising the step of:
(i) contacting the surface of at least one metal part at least partially with an aqueous solution comprising an oxidizing agent and an alkaline agent, at a temperature and for a duration sufficient to obtain a shiny metal surface.

The invention is also directed to a metal-polymer composite that comprises at least one part made of a polymer composition and at least one chemically polished metal part and that is obtainable by said method and to a product comprising said metal-polymer composite.

## Description

### [Technical Field]

The present application concerns a method for chemically polishing metal pieces, notably metal inserts that are intended to be part of metal-composites. The present invention further concerns metal parts thus produced and products such as metal-polymer composites incorporating such metal parts.

### [State of the Art]

In modern products, polymers advantageously replace metals, in particular in view of reducing weight. However, some parts still are preferably made of metal, notably to ensure better mechanical properties. As a result, mobile phones for instance may incorporate a metal frame, while other parts are made of polymer. Such metal-polymer composite products may be produced by insert molding.

The manufacture of such composite products can be challenging, in particular because most polymers do not readily adhere to metal. Good adhesion between the two materials is however essential for obtaining a durable and robust product. Also, the adhesion should be preserved despite subsequent production steps such as the metal anodization for decorative purposes.

For certain applications, a shiny metal surface in the metal-polymer composite is also required. The metal shine can be improved using strong chemicals at high temperature. Such treatment is called chemical polish.

However, it has been observed that when a metal-polymer composite is submitted to a conventional chemical polish step using strong acids such as nitric acid, polymers may be degraded, notably their surface may be roughened. Furthermore, for some polymers, such as polyamides, such chemical polish may also affect the color. The use of such acids moreover may also pose environmental problems due to phosphate release.

### [Summary of the invention]

The invention thus aims to propose a method for chemically polishing a metal piece within a metal-polymer composite that does not produce the inconveniences mentioned above, and in particular avoids polymer degradation such as a roughening of the surface and/or polymer discoloration.

The invention also aims to provide a method for producing such composites that comprise metal surfaces with a superior shine.

Indeed, the inventors have unexpectedly discovered that when metal-polymer composites are chemically polished using bases instead of acids, the polymer is preserved, and is less, or even not at all subject to discoloration.

While chemical polish of metal surfaces is conventionally carried out using acids, chemical polish of using bases is also known, for instance from the patent application JP 2000054166 A2, as being more environmentally friendly. This document however does not refer to metal-polymer composites and thus does not address the problem of polymer degradation.

The process according to the invention results in highly shiny metal surfaces of the composite while it does not affect the polymer of the metal-polymer composite, and in particular not its surface or color.

Metal-polymer composites manufactured using the process disclosed thus exhibit metal surfaces with an excellent shine with the polymer having its surface preserved and its true color. Such composites are particularly suitable for use in the manufacture of products in the E/E field, for the consumer market and for automobile interiors.

Therefore, a first aspect of the invention is a method for chemically polishing a metal surface within a metal-polymer composite, where said composite comprises at least one metal part with said metal surface and at least one part made of a polymer composition, said method comprising the step of:
(i) contacting said composite at least partially with an aqueous solution comprising an oxidizing agent and an alkaline agent, at a temperature and for a duration sufficient to obtain a shiny metal surface.

According to a particular embodiment, the polymer composition comprises at least one polymer comprising an amide bond.

According to a particular embodiment, the alkaline agent in the aqueous solution used in step (i) is selected from the group consisting of sodium hydroxide, potassium hydroxide, lithium hydroxide, calcium hydroxide, magnesium hydroxide, ammonium hydroxide and mixtures thereof.

According to a particular embodiment, the oxidizing agent in the aqueous solution used in step (i) is selected from the group consisting of permanganates, persulfates, perchlorates, perborates, peroxides, percarbonates, chromates, chlorites, chlorates, bromates, hypochlorites, borates, nitrates, dichloroisocyanuric acid and mixtures thereof.

According to a particular embodiment, the aqueous solution used in step (i) comprises an alkali hydroxide and an alkali persulfate.

According to a particular embodiment, the aqueous solution used in step (i) comprises sodium hydroxide and sodium persulfate.

According to a particular embodiment, the aqueous solution used in step (i) comprises 0.1 to 20 wt.% of at least one alkaline agent and 5 to 70 wt.% of at least one oxidizing agent.

According to a particular embodiment, the polymer composition of the metal-polymer composite comprises at least one polyamide, especially selected from the group consisting of PA 410, PA 6, PA 66, PA 46, PA 610, PA 612, PA 614, PA 618, PA 10, PA 11, PA 12, PA 910, PA 912, PA 913, PA 914, PA 915, PA 916, PA 918, PA 936, PA 106, PA 1010, PA 1012, PA 1013, PA 1014, PA 1018, PA 126, PA 1210, PA 1212, PA 1213, PA 1214, PA 1218, PA 614, PA 613, PA 615, PA 616, PA 618, PA MXD6, PA PXD6, PA MXD10, PA PXD10, PA 4T, PA 6T, PA 9T, PA 10T, PA 12T, PA 18T, and blends and copolymers thereof.

According to a particular embodiment, the polymer composition further comprises reinforcing fillers.

According to a particular embodiment, the polymer composition is colored.

According to a particular embodiment, the metal part comprises or consists of a metal chosen from the group consisting of aluminum, iron, copper, titanium, zinc, magnesium, niobium, zirconium, hafnium, tantalum and their alloys.

According to a particular embodiment, the surface of the at least one metal part of the metal-polymer composite is at least partially submitted to an anodization step, prior to, during or after step (i).

A second aspect of the invention is a metal-polymer composite that comprises at least one part made of a polymer composition comprising at least one polymer comprising an amide bond and at least one chemically polished metal part, obtainable by the method described above.

A third aspect of the invention is a product comprising said metal-polymer composite.

According to a particular embodiment, said product is chosen from the group consisting of mobile devices such as mobile phones, computers, tablets, smart watches, and cameras.

### [Description of embodiments of the invention]

### Definitions

Within the present application, the term **polymer** means a macromolecule composed of molecules of high relative molecular mass, the structure of which essentially comprises the multiple repetition of units derived, actually or conceptually, from molecules of low relative molecular mass. This term encompasses **homopolymers**, which derive from a single unit derived from one or more molecules of low relative molecular mass, and also **copolymers** which derive from two or more such units. The different units may be arranged in the copolymer either randomly or in a more regular fashion, such as in form of recurring sequences of units or blocks of units of a certain length.
The term **polyamide** designates a macromolecule with repeating units linked by amide bonds.
The term **long chain polyamide** is meant to designate a polyamide having, on average, 9 or more, and preferably 10 or more carbon atoms for each nitrogen atom.
The term **semi-crystalline** polymer is understood to mean a polymer whose fusion enthalpy of more than 30 J/g, as measured according to ISO 11357-3 (1999), using differential scanning calorimetry and a heating rate of 20°C/min.
The term **metal-polymer composite** is meant to designate a multiphasic material comprising a polymer phase and a metallic material. Within the present application is in particular meant a material resulting from bonding a metallic piece to a part made of or comprising a polymer composition. The polymer composition comprises one or more polymers and may further comprise other materials such as reinforcement fillers.

In general terms, the invention is a method for chemically polishing a metal surface within a composite further comprising a semi-crystalline polymer by contact with an aqueous solution comprising an oxidizing agent and an alkaline agent.

### The aqueous solution

According to the invention, the metal-polymer composite is chemically polished using an aqueous solution comprising at least one oxidizing agent and at least one alkaline agent.

**The alkaline agent.** The alkaline agent in the aqueous solution may be chosen among inorganic and organic bases. Preferably, the alkaline agent is a strong base, that is, it is able to completely dissociate water into their cation and OH⁻ anion. Such alkaline agents are notably the hydroxides of alkali and alkaline earth metals. However, ammonium hydroxide may also be considered. According to one embodiment of the invention, the alkaline agent is selected from the group consisting of sodium hydroxide, potassium hydroxide, lithium hydroxide, calcium hydroxide, magnesium hydroxide, ammonium hydroxide and mixtures thereof.

The quantity of alkaline agent required in the aqueous solution depends on the selected agent and on the nature of the metal to be polished. Generally, an amount of 0.1 to 20, preferably 0.2 to 10 and in particular 0.5 to 4 wt.% and especially 1 to 2 wt.% of alkaline agent in the aqueous solution is sufficient. Preferably, the alkaline agent is added in a quantity that does not exceed its solubility in the aqueous solution.

Preferably, the quantity of alkaline agent is adjusted so that the aqueous solution presents a pH of 10 or more, preferably of 11 or more, and in particular of 12 or more.

**The oxidizing agent.** The oxidizing agent in the aqueous solution may be chosen notably among the known oxidizing agents, notably oxidizing salts, such as permanganates, persulfates, perchlorates, perborates, peroxides, percarbonates, chromates, chlorites, chlorates, bromates, hypochlorites, borates, nitrates, or dichloroisocyanuric acid, and mixtures thereof. Oxidizing agents with a solubility in water at 25°C of at least 1g/L, and in particular at least 10 g/L are preferred. Preferred oxidizing agents are persulfates and perborates such as sodium persulfate, potassium persulfate, sodium perborate and potassium perborate and mixtures thereof. Sodium and potassium persulfate are particularly preferred oxidizing agents.

The quantity of oxidizing agent required in the aqueous solution depends on the selected oxidizing agent and on the nature of the metal to be polished. Generally, the aqueous solution may comprise 5 to 70, preferably 10 to 50 and in particular 20 to 45 wt.% of oxidizing agent.

Other additives such as surfactants may also be present in the chemical polish. Preferably, such additives are however present in minor quantities, in particular from 0 to 5 wt.% and in particular from 0.1 to 1 wt.% with respect to the aqueous solution.

According to an embodiment of the invention, the aqueous solution comprises 0.1 to 20 wt.% of at least one alkaline agent and 5 to 70 wt.% of at least one oxidizing agent.

The remainder of the aqueous solution is a solvent. The solvent comprises water, preferably at least 50 wt.% of water and may also consist only of water. Other solvents such as alcohols or ethers may however also be present, albeit preferably in minor amounts. The water is preferably, but not necessarily, distilled water.

A particularly preferred aqueous solution comprises an alkali hydroxide and an alkali persulfate, and in particular, sodium hydroxide and sodium persulfate.

### The metal-polymer composite.

**The metal.** The metal part or parts in the metal-polymer composite may be in principle made of any kind of metal that may be submitted to chemical polishing.

The method of the invention is particularly useful for composites with metal parts that comprise or consist of a metal chosen from the group consisting of aluminum, iron, copper, titanium, zinc, magnesium, niobium, zirconium, hafnium, tantalum and their alloys.

According to a particular embodiment, the metal is anodizable. Other metals such as iron or steel, notably stainless steel, may also be used, alone or in combination with those just mentioned.

The metal parts may have been treated prior to the chemical polishing. In particular, they may have been submitted to a TRI treatment so as to improve adhesion to the polymer. The TRI treatment may be carried out by simply contacting the surface of the metal part by a solution of the triazine trithiol derivative, for instance by spraying or dip coating. The solution of the triazine thiol derivative may notably be water based. However, it is also possible to add to the water or replace the water by any other suitable solvent of the derivative.

The triazine thiol derivative is preferably a compound of the general formula (I) below: 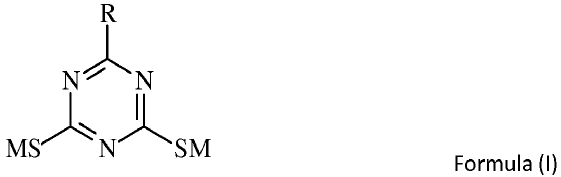 Wherein:
R denotes -OR¹, -SR¹, -NHR¹ or N(R¹)₂;
R¹ denotes hydrogen or an alkyl, alkenyl, phenyl, phenylalkyl, alkylphenyl, or cycloalkyl group; and
M denotes hydrogen, a monovalent metal such as Na, Li, K, ½ Ba or ½ Ca, an aliphatic primary, secondary or tertiary amine, or a quaternary ammonium salt.

Preferably, the triazine thiol derivative is chosen among the group consisting of 1,3,5-triazine-2,4,6-trithiol (F), 1,3,5-triazine-2,4,6-trithiol monosodium salt (FN), 1,3,5-triazine-2,4,6-trithiol triethanolamine salt (F. TEA), 6-anilino-1,3,5-triazine-2,4-dithiol (AF), 6-anilino-1,3,5-triazine-2,4-dithiol monosodium salt (AN), 6-dibutylamino-1,3,5-triazine-2,4-dithiol (DB), 6-dibutylamino-1,3,5-triazine-2,4-dithiol monosodium salt (DBN), 6-diallylamino-1,3,5-triazine-2,4-dithiol (DA), 6-diallylamino-1,3,5-triazine-2,4-dithiol monosodium salt (DAN), 1,3,5-triazine-2,4,6-trithiol di (tetrabutyl ammonium salt) (F2A), 6-dibutylamino-1,3,5-triazine-2,4-dithiol tetrabutylammonium salt (DBA), 6-dilaurylamino-1,3,5-triazine-2,4-dithiol (DL), 6-dilaurylamino-1,3,5-triazine-2,4-dithiol monosodium salt (DLN), 6-stearylamino-1,3,5-triazine-2,4-dithiol (ST), 6-stearylamino-1,3,5-triazine-2,4-dithiol monopotassium salt (STK), 6-oleylamino-1,3,5-triazine-2,4-dithiol (DL) and 6-oleylamino-1,3,5-triazine-2,4-dithiol monopotassium (OLK).

Particularly preferred are triazine trithiol derivatives such as 1,3,5-triazine-2,4,6-trithiol (F), 1,3,5-triazine-2,4,6-trithiol monosodium salt (FN), 1,3,5-triazine-2,4,6-trithiol triethanolamine salt (F. TEA) and 1,3,5-triazine-2,4,6-trithiol di (tetrabutyl ammonium salt) (F2A).

Triazine thiol derivatives may form a covalent bond with a terminal function group of the polymer contained in the polymer composition, for instance by reaction of the thiol group with a terminal amine group of a polyamide. Such covalent bonds enhance the adhesion between the polymer and the metal.

The solution used preferably comprises at least 0.001 wt.% of triazine thiol derivative. A quantity below this content is likely not to produce any substantial effect on the adhesion between metal and polymer composition. Furthermore, the electrolytic solution preferably comprises not more than 20 wt.% of triazine thiol derivative. Indeed, a concentration above this value may not lead to a homogeneous layer on the metal surface. The solution may further comprise one or more additives. Particularly preferred is a solution comprising 0.001 to 10 wt.%, and in particular 0.01 to 5 wt.% of triazine thiol derivative.The treatment leads to the formation of a film on the metal surface which contains the triazine thiol derivative.

Further, it is often required to color the metal surfaces, for instance by submitting the polished metal surface to a subsequent anodization step. According to an embodiment of the invention, the method thus further comprises a step wherein the polished metal surface is submitted to an anodization step.

Anodization designates the electrolytic passivation process used to increase the thickness of the natural oxide layer on the surface of metal parts. The process is called anodizing because the part to be treated forms the anode electrode of an electrolytic cell. Anodizing changes the microscopic texture of the surface and the crystal structure of the metal near the surface. Thick coatings are normally porous, so a sealing process is often needed to achieve corrosion resistance. Anodized aluminum surfaces, for example, are harder than aluminum but have 30 low to moderate wear resistance that can be improved with increasing thickness or by applying suitable sealing substances. Anodic films can also be used for a cosmetic effects, either with thick porous coatings that can absorb dyes or with thin transparent coatings that add interference effects to reflected light.

Anodization may be conducted by immersing the metal in an electrolytic solution, connecting it to a cathode, and to apply a specific voltage between the two electrodes for a predetermined time. The cathode may be for instance a plate made of platinum, titanium or carbon.

The electrolytic solution may notably comprise water and one or more water soluble ionic compounds, notably mineral or organic acids, bases or salts. Preferred electrolytic solutions comprise further to water sulfuric acid, nitric acid or phosphoric acid.

The anodization step may be conducted in an electrolytic solution which contains a triazine thiol derivative as described above.

The anodization step is generally conducted upon applying a voltage between cathode and the metal part serving as an anode. The voltage to be applied can vary notably depending on the nature and concentration of the electrolytic solution and the size, form and nature of the metal part and the cathode. However, satisfactory results are generally obtained when the voltage applied is set between 0.1 and 30 V, preferably between 1 and 20 V and in particular between 2 and 8 V. Temperature and duration of the anodization step can be varied so as to obtain an anodized film that has the required thickness. A thickness of the anodization layer of 1 to 50, preferably 5 to 30 and in particular between 10 and 20 microns is generally adapted to improve the adhesion between the metal and polymer composition. Preferably, the metal surface is cleaned after treatment for instance by washing with a suitable solvent such as water. The cleaned treated metal surface may then be dried by any conventional means such as air blowing.

**The polymer composition.** The polymer composition in the metal-polymer composite treated in the method according to the invention may in principle comprise any polymer.

The polymers may be amorphous, microcrystalline or semicrystalline. Semicrystalline polymers are however particularly generally preferred. According to a preferred embodiment of the invention, the polymer composition thus comprises at least one semi-crystalline polyamide.

The polymers may further be homopolymers, copolymers or blends thereof.

Problems of surface roughening and discoloration have been observed in particular for compositions that comprise at least one polymer comprising an amide bond. Such polymers may be notably aliphatic, cycloaliphatic or semi-aromatic polyamides or copolyamides or comprise polyamide moieties.

Semi-crystalline polyamides may be chosen notably from: PA 410, PA 6, PA 66, PA 46, PA 610, PA 612, PA 614, PA 618, PA 10, PA 11, PA 12, PA 910, PA 912, PA 913, PA 914, PA 915, PA 916, PA 918, PA 936, PA 106, PA 1010, PA 1012, PA 1013, PA 1014, PA 1018, PA 126, PA 1210, PA 1212, PA 1213, PA 1214, PA 1218, PA 614, PA 613, PA 615, PA 616, PA 618, PA MXD6, PA PXD6, PA MXD10, PA PXD10, PA 4T, PA 6T, PA 9T, PA 10T, PA 12T, PA 18T and blends and copolymers thereof.

Particularly preferred semi-crystalline polyamides have, on average, 8 or more, 9 or more carbon atoms and especially 10 or more carbon atoms per nitrogen atom. Such semi-crystalline polyamides may be selected among PA 610, PA 612, PA 614, PA 618, PA 10, PA 11, PA 12, PA 910, PA 912, PA 913, PA 914, PA 915, PA 916, PA 918, PA 936, PA 106, PA 1010, PA 1012, PA 1013, PA 1014, PA 1018, PA 126, PA 1210, PA 1212, PA 1213, PA 1214, PA 1218, PA 613, PA 614, PA 615, PA 616, PA 618, PA MXD10, PA PXD10, PA 10T, PA 12T, PA 18T, and blends and copolymers thereof.

Semi-crystalline copolyamides are also suitable for carrying out the invention. Such copolyamides may be selected notably among PA 10/11, PA 10/12, PA 11/12, PA 6/10, PA 6/12, PA 6/9, PA 8/10, PA 11/10T, PA 12/10T, PA 66/6, PA 4T/4I, PA 4T/6I, PA 5T/5I, PA 6T/66, PA 6/6T/6I, PA 66/6T/6I, PA 6T/6I and PA 6/6T PA 6T/610, PA 6T/612, PA 6T/9T, PA 6T/10T, PA 6T/12T, PA 6T/6I/12, PA 6T/6I/11, PA 6T/6I/6, PA 6T/6I/10T, PA 10T/106, PA 10T/10I, PA 10T/612, PA 10T/1010, PA 10T/1012 and mixtures thereof.

Particularly preferred polyamides and copolyamides are PA 1010, PA 1012, PA 610, PA MXD10, PA 11, PA 12, PA 12/10T, PA 11/10T and mixtures thereof.

The polymer composition may further comprise minor amounts of other polymers such as functionalized polyolefins. However, such additional polymers will be present in an amount of less than 30 wt.%, in particular less than 20 wt.% and in particular less than 10 wt.% with respect to the total polymer composition.

The polymer composition may also comprise one or more reinforcing fillers. Such reinforcing fillers are particles added to improve the mechanical properties of a material. Reinforcing fillers may be notably in form of a powder, beads, fibers, milled fibers or flakes. They may be made of massive material or may be hollow so save weight.

The reinforcing fillers may be made of various materials, notably glass, carbon, mineral oxides such as talc, silica or titanium dioxide, or polymers such as aramids. Preferred reinforcing fibers within the present invention are made of glass or carbon. Particularly preferred are reinforcing fillers such as glass fibers, milled glass fibers, glass powder, glass beads, glass flakes and their combinations.

The average diameter of the fibers is preferably from 5 to 50 µm, preferably from 10 to 45 µm. The average diameter of the fiber and the length to diameter ratio of the milled fiber are preferably from 5 to 50 µm and from 2 to 150, respectively. The average size of powder particles is preferably from 1 to 100 µm. The average size of beads is preferably from 5 to 300 µm. The average thickness of flakes is preferably from 0.1 to 10 µm. Particle size is determined respectively according to ISO 13320-1 :2009.

Advantageously, the reinforcing fillers may be surface-treated with a coupling agent in order to increase the affinity and the adhesion between the polymer and the reinforcing filler. Mention may be made, as coupling agent, of those based on silane, on borane, on aluminates, those of titanate type, and the like. In particular, the silane coupling agents are preferred as they make possible good adhesion between the amorphous polyamide resin and the glass filler. Use may be made, as coupling agent of silane type, of aminosilane, epoxysilane and acrylsilane coupling agents and the like. Among silane coupling agents, aminosilane coupling agents are preferred.

In addition, the treatment of the fillers can optionally comprise film-forming agents, lubricating agents, antistatic agents and the like, in addition to the coupling agent. These components can be used alone or in combination. Mention may be made, as examples of film-forming agent, of vinyl acetate, urethane, acrylic, polyester, polyether, phenoxy, polyamide and epoxy resins and/or the like. Mention may be made, as examples of lubricating agent, of aliphatic ester, aliphatic ether, aromatic ester or aromatic ether surface-active agents. Mention may be made, as examples of antistatic agent, of inorganic salts, such as lithium chloride or potassium iodide, and also quaternary ammonium salts, such as ammonium chloride or ammonium ethosulfate.

In the present invention, the content of reinforcing filler in the polyamide composition is preferably from 5 to 80% by weight, in particular from 10 to 70%, preferably from 20 to 60% by weight, and notably from 30 to 50% by weight, with respect to the total weight of the polymer composition.

The polymer composition may, further to the reinforcing filler, also comprise one or more other additives and transformation aids such as colouring agents, in particular pigments, dyes, effect pigments, such as diffractive pigments, interference pigments, such as pearlescent agents, reflective pigments and mixtures thereof; stabilizers, notably UV stabilizers; anti-ageing agents; antioxidants; fluidizing agents; anti-abrasion agents; mould-release agents; plasticizers; impact modifiers; surfactants; brighteners; waxes and mixtures thereof, and/or any other additive well known in the field of polymers.

The invention is particularly suitable for metal-polymer composites that comprise a colored polymer composition, notably a polymer composition comprising pigments and/or dyes.

Pigments and dyes may be choses in particular among the group consisting of organic or inorganic compounds, notably chosen among carbon black, zinc oxide, titanium dioxide, chrome antimony titanium buff rutile, ultramarine blue, cobalt titanate green spinel and mixtures thereof.

The polymer composition preferably comprises from 0 to 30 wt.%, advantageously 1 to 20 wt.% and in particular 5 to 10 wt.% of pigments, dyes or other such additives, with respect to the total weight of the polymer composition.

The metal-polymer composites may be produced according well-known processes.

In particular, the metal-polymer composites useful within the present invention may be produced by method comprising the steps of :
(i) treating the surface of at least one metal part at least partially with a solution of triazine trithiol derivative to obtain a treated metal surface; and
(ii) contacting the treated metal surface at least partially with at least one polymer composition so as to obtain a metal-polymer composite.

Step (ii) of said method may advantageously be carried out by conventional polymer transformation techniques such as insert molding, such as insert molding, co-extrusion or powder coating.

The term insert molding designates a process wherein a polymer composition is injected into a mold which contains a pre-placed part, also called an insert, often made of metal. The result of insert molding is a single molded piece with the insert surrounded by the polymer composition. Applications of insert molding include insert-molded couplings, threaded fasteners, filters and electrical components. Such process is conventional and can be carried out using specific machines that exist on the market.

### The chemical polish.

According to the invention, the chemical polish is carried out by contacting the metal-polymer composite at least partially with an aqueous solution comprising an oxidizing agent and an alkaline agent, at a temperature and for a duration sufficient to obtain a shiny metal surface.

Contacting the composite with the solution may be carried out according to any conventional means, for instance within in suitable vessel equipped with appropriate heating means.

During this step, the aqueous solution has preferably a temperature of 20 to 95°C, in particular 30 to 90°C, especially 40 to 85°C and most preferably 60 to 80°C.

The time required to chemically polish the metal surface within the composite is rather short but depends on parameters such as the temperature and the nature of the solution. It can be easily identified using simple tests. Generally, the time required for obtaining a shiny metal surface by chemical polish is between 10 s and 30 min, in particular 30s to 20 min and especially 1 to 10 min.

Step (i) of the method of the invention may be followed by a step (ii) of rinsing the metal-polymer composite to eliminate the aqueous solution.

The metal-polymer composite obtained possesses shiny metal surfaces, while the polymer is neither degraded nor discolored. Such composite may be used directly or submitted to further treatments.

According to a second aspect, the invention is directed to a metal-polymer composite that comprises at least one part made of a polymer composition comprising at least one polymer comprising an amide bond and at least one chemically polished metal part, obtainable by the method according to the invention.

The outstanding esthetic qualities of both the metal and the polymer coupled with a high adhesion strength and high waterproofness makes such composites particularly attractive for the manufacture of parts for mobile devices such as mobile phones, computers, tablets, and airtight connectors.

According to a third aspect, the invention is thus directed to a product comprising said metal-polymer composite, notably parts for mobile devices such as mobile phones, computers, tablets, smart watches, and cameras and more generally, for waterproof devices.

The invention will be explained more in detail by way of the following examples.

### [EXAMPLES]

### Examples 1 to 6

Polymer-metal composites were prepared and submitted to alkali polishing.

First, sample bars made of aluminum (A-1050) were treated by TRI technology as follows:
(1) Immersion for 1 min in a solution of 5wt.% aluminum hydroxide in water heated to 42 °C (alkaline etching);
(2) Immersion for 2 min in an aqueous solution of 10mL/L sulfuric acid heated to 40°C (neutralization);
(3) Immersion for 75 min in an electrodeposition bath equipped with a platinum plate acting as an cathode and filled with an aqueous solution of 0.003 wt.% 1,3,5-triazine- 2,4,6-trithiol monosodium salt and 2.3 wt.% sulfuric acid heated to 60°C while applying a voltage of 2.7 V, so as to form an anodic oxide film comprising alumina and the triazine thiol derivative on the aluminum surface;
(4) Washing with hot water; and
(5) Drying for 4 min in hot air (80°C).

The treated aluminum bars were sealed in vacuumed bags to avoid moisture pick up before being used to prepare metal-polymer composites by injection molding with two different polymer compositions (see table 1 below).

**Table 1: Reinforced polymers**

| **polymer** | **Reinforcement filler** | **quantity of filler [wt.%]** |
|---|---|---|
| PBT (polybutyleneterephtalate) (Toraycon 1101G-X54, black from Toray) | Glass fiber | 30 |
| PA 1010 + PA MXD10 (weight ratio 1010/MXD10 = 70/30), black | Glass fiber | 60 |
| PA MXD10*, black | Glass fiber | 50 |
| PA 11/10T, black | Glass fiber | 50 |

| | | |
|---|---|---|
| * Formulation with nucleating agent | | |

Injection molding was carried out in a Nissei TNS50 RE5VE vertical injection machine, having a maximum clamping force of 50 ton and a screw diameter of 22mm and using an injection pressure of 179 MPa, an injection speed of 10% and an injection time of 10 seconds.

The metal-polymer composites obtained (example 1 and 2) were then submitted to a chemical polishing step using an alkali chemical polish as follows. The alkali chemical polish is prepared by dissolving 1,5 g of NaOH and 32 g of Na₂S₂O₈ in 66,5 g of distilled water in a suitable vessel. The polish is heated to 70°C and the metal to be polished is soaked in the solution for a duration of 6 minutes.

The aspect of the samples after chemical polish was evaluated by visual inspection. The results are given in Table 2 below.

Further, sample plates of different polyamides (see table 1 above) with dimensions of 30 x 100 x 1 mm³ were manufactured and part of the sample plates was soaked in the chemical polish as explained above (examples 3 to 6). The aspect of the treated and untreated part of the samples was evaluated visually. The results are given in Table 2 below.

**Table 2: Aspect of samples submitted to chemical polishing**

| **Example** | **Polymer** | **Metal** | **Sample after chemical polish** | |
|---|---|---|---|---|
| | | | **Metal** | **Polymer** |
| 1 | PBT (Toraycon 1101G-X54 black from Toray) | TRI treated aluminum | Highly polished | No change |
| 2 | Polyamide (PA 1010 + PA MXD10, weight ratio 1010/MXD10 = 70/30), black | TRI treated aluminum | Highly polished | No change |
| 3 | PBT (Toraycon 1101G-X54 black from Toray) | - | - | No change |
| 4 | Polyamide (PA 1010 + PA MXD10, weight ratio 1010/MXD10 = 70/30), black | - | - | No change |
| 5 | PA MXD10* | - | - | No change |
| 6 | PA 11/10T | - | - | No change |
| C1 | PBT (Toraycon 1101G-X54 black from Toray) | TRI treated aluminum | Polished | No significant discoloration, polymer surface roughened |
| C2 | Polyamide (PA 1010 + PA MXD10, weight ratio 1010/MXD10 = 70/30), black | TRI treated aluminum | Polished | Polymer discolored, polymer surface roughened |

| | | | | |
|---|---|---|---|---|
| * Formulation with nucleating agent | | | | |

### Comparative Examples 1 and 2

For comparison, samples of polymer-metal composites were prepared as for examples 1 and 2 but were submitted to chemical polishing using acid instead of alkali (example C1 and C2) as explained below.

The solution for acid chemical polishing is prepared by mixing H₃PO₄ (conc. 85%), HNO₃ (conc. 60 %) and distilled water in a ratio of 85:7:8 by volume in a suitable vessel. The solution obtained is heated to 85°C and the metal to be polished is soaked in the solution for a duration of 20 seconds.

The aspect of the samples after chemical polish was evaluated by visual inspection. The results are given in Table 2 above.

The results show that polishing a metal-polymer composite using an alkali polish according to the invention instead of the conventional acid polish allows for excellent shine of the metal surfaces while it avoids damages in the polymer such as surface roughening or discoloration.

### [List of cited documents]

JP 2298284 A2
JP 2001-200374
US 8,394,503 B2
US 9,683,304 B2
JP 2000054166 A2

## Claims

1. A method for chemically polishing a metal surface within a metal-polymer composite, where said composite comprises at least one metal part with said metal surface and at least one part made of a polymer composition, said method comprising the step of:
(i) contacting said composite at least partially with an aqueous solution comprising an oxidizing agent and an alkaline agent, at a temperature and for a duration sufficient to obtain a shiny metal surface.

2. Method according to claim 1, wherein the polymer composition comprises at least one polymer comprising an amide bond.

3. Method for producing metal-polymer composites according to claim 1 or 2, wherein the alkaline agent in the aqueous solution used in step (i) is selected from the group consisting of sodium hydroxide, potassium hydroxide, lithium hydroxide, calcium hydroxide, magnesium hydroxide, ammonium hydroxide and mixtures thereof.

4. Method for producing metal-polymer composites according to any of claims 1 to 3, wherein the oxidizing agent in the aqueous solution used in step (i) is selected from the group consisting of permanganates, persulfates, perchlorates, perborates, peroxides, percarbonates, chromates, chlorites, chlorates, bromates, hypochlorites, borates, nitrates, dichloroisocyanuric acid and mixtures thereof.

5. Method for producing metal-polymer composites according to any of claims 1 to 4, wherein the aqueous solution used in step (i) comprises an alkali hydroxide and an alkali persulfate.

6. Method for producing metal-polymer composites according to any of claims 1 to 5, wherein the aqueous solution used in step (i) comprises 0.1 to 20 wt.% of at least one alkaline agent and 5 to 70 wt.% of at least one oxidizing agent.

7. Method for producing metal-polymer composites according to any of claims 1 to 6, wherein the polymer composition comprises at least one polyamide.

8. Method for producing metal-polymer composites according to claim 7, wherein at least one polyamide is selected from the group consisting of PA 410, PA 6, PA 66, PA 46, PA 610, PA 612, PA 614, PA 618, PA 10, PA 11, PA 12, PA 910, PA 912, PA 913, PA 914, PA 915, PA 916, PA 918, PA 936, PA 106, PA 1010, PA 1012, PA 1013, PA 1014, PA 1018, PA 126, PA 1210, PA 1212, PA 1213, PA 1214, PA 1218, PA 614, PA 613, PA 615, PA 616, PA 618, PA MXD6, PA PXD6, PA MXD10, PA PXD10, PA 4T, PA 6T, PA 9T, PA 10T, PA 12T, PA 18T, and blends and copolymers thereof.

9. Method for producing metal-polymer composites according to any of claims 1 to 8, wherein the polymer composition further comprises reinforcing fillers.

10. Method for producing metal-polymer composites according to any of claims 1 to 9, wherein the polymer composition is colored.

11. Method for producing metal-polymer composites according to any of claims 1 to 10, wherein the metal part comprises or consists of a metal chosen from the group consisting of aluminum, iron, copper, titanium, zinc, magnesium, niobium, zirconium, hafnium, tantalum and their alloys.

12. Method for producing metal-polymer composites according to any of claims 1 to 11, wherein the surface of the at least one metal part is at least partially submitted to an anodization step, prior to, during or after step (i).

13. A metal-polymer composite that comprises at least one part made of a polymer composition comprising at least one polymer comprising an amide bond and at least one chemically polished metal part, obtainable by the method according to any of claims 1 to 12.

14. Product comprising a metal-polymer composite according to claim 13.

15. Product according to claim 14, chosen from the group consisting of mobile devices such as mobile phones, computers, tablets, smart watches, and cameras.
